# EUROPÄISCHE PATENTSCHRIFT

(11) **EP 1 412 648 B1**
(45) Veröffentlichungstag und Bekanntmachung des Hinweises auf die Patenterteilung: **23.08.2006**
(21) Anmeldenummer: 02791441.5
(22) Anmeldetag: 03.07.2002
(51) Int. Cl.: F16C 29/06

(54) **LINEARWÄLZLAGERELEMENT**
LINEAR ANTIFRICTION BEARING ELEMENT
ELEMENT PALIER A ROULEMENT LINEAIRE

(30) Priorität: 27.07.2001 DE 10136826
(43) Veröffentlichungstag der Anmeldung: 28.04.2004
(73) Patentinhaber: Schaeffler KG, 91074 Herzogenaurach (DE)
(72) Erfinder: SATTLER, Michael, 66482 Zweibrücken (DE); MENGES, Martin, 66424 Homburg (DE); RUDY, Dietmar, 66501 Kleinbundenbach (DE)
(86) Internationale Anmeldenummer: PCT/EP2002/007331
(87) Internationale Veröffentlichungsnummer: WO 2003/012306

(56) Entgegenhaltungen:
- DE-A- 4 412 797
- US-A- 5 268 970
- US-A- 5 399 023
- US-A- 5 547 285

## Beschreibung

### Gebiet der Erfindung

Die Erfindung betrifft ein Linearwälzlagerelement mit einem Tragkörper, der über Wälzkörper an der Lauffläche einer Führungsschiene verschiebbar gelagert ist und für einen Wälzkörperumlauf jeweils eine zu seiner Bewegungsrichtung parallele Tragzone und einen Rücklaufkanal aufweist, die über zwei Umlenkkanäle miteinander verbunden sind, welche an dem Tragkörper in stirnseitig angrenzenden Kopfstücken angeordnet sind, wobei die Kopfstücke zu den Wälzkörpern führende Schmierstoffleitungen enthalten, welche an einer Einfüllstelle des jeweiligen Kopfstücks beginnen.

Ein solches Lagerelement ist aus der Druckschrift DE 43 31 014 C2 bekannt. Dort dient eine von einer inneren Halteplatte und einer äußeren Halteplatte gebildete Baueinheit der Halterung eines Frontabstreifers und ist außerdem mit Kanälen für die Schmierstoffverteilung versehen. Wenn hier der Druck des Schmierstoffs in den Kanälen abfällt, besteht die Gefahr, daß die Schmierstoffkanäle oder Schmierstoffleitungen leerlaufen.

### Zusammenfassung der Erfindung

Um ein Linearwälzlagerelement der eingangs genannten Art zu schaffen, bei welchem die Schmierung aller Laufbahnen sicher und gleichmäßig erfolgen kann, wird nach US-A-5 399 023 (Fig.1-4 und 7) vorgeschlagen, daß mindestens eine für einen Wälzkörperumlauf vorgesehene Schmierstoffleitung in eine Zufuhrleitung und eine Austrittsleitung aufgeteilt ist, wobei die Zufuhrleitung und die Austrittsleitung über eine verschließbare Schmiertasche miteinander verbunden sind. Durch die Integration einer Schmiertasche in der Schmierstoffleitung, wobei die Tasche mit einem durch Schmierstoffdruck gesteuerten Öffnungsmechanismus versehen sein muß, wird nach einem Druckabfall das Leerlaufen der Schmierstoffleitung verhindert. Als Wälzkörper könnten in einem solchen Lagerelement Rollen, Nadeln oder Kugeln verwendet werden.

Bei diesem Linearwälzlagerelement ist die Austrittsleitung für den Schmierstoff nach außen dicht verschlossen. Das Lagerelement ermöglicht es, den Schmierstoff zu dosieren bzw. verbrauchsgesteuert seinem Einsatzort zuzuführen.

Der Erfindung liegt die Aufgabe zugrunde, ein zuverlässiges öffnen und Schließen der Austritts-leitung zu gewährleisten.

Diese Aufgabe wird erfindungsgemäß dadurch gelöst, daß die Schmiertasche in der Form eines Hohlzylinders ausgeführt ist, in welchen ein die Austrittsleitung verschließender elastischer Stopfen hineinragt.

Der elastische Stopfen kann aus einem Kunststoff oder einem Gummiwerkstoff hergestellt sein. Er kann auch aus einem Filz oder einem porösen Werkstoff bestehen. Innerhalb der Schmiertasche ist eine an dem elastischen Stopfen anliegende Druckscheibe angeordnet. Diese kann aus einem steifen Gummi-Werkstoff hergestellt sein. Der Werkstoff des elastischen Stopfens kann sich auch innerhalb der Austrittsleitung erstrecken und mit der Lauffläche der Führungsschiene in Berührung stehen.

### Kurze Beschreibung der Zeichnung

Ausführungsbeispiele der Erfindung sind in der Zeichnung dargestellt und werden im folgenden näher beschrieben. Es zeigen
- Figur 1: eine stirnseitige Ansicht eines erfindungsgemäßen Lagerelementes, welches an einer Führungsschiene über Wälzkörper längsverschieblich abgestützt ist;
- Figur 2: einen vergrößerten Teilschnitt durch ein Kopfstück des in Figur 1 dargestellten Lagerelementes;
- Figur 3: einen Teilschnitt wie in Figur 2, jedoch mit einem abgewandelten elastischen Stopfen;
- Figur 4: ein an einer Führungsschiene längsverschieblich angeordnetes vorbekanntes Lagerelement in der Draufsicht;
- Figur 5: einen Endbereich des Tragkörpers ohne Kopfstück des Lagerelementes nach Figur 4 in vergrößerter Darstellung.

### Ausführliche Beschreibung der Zeichnung

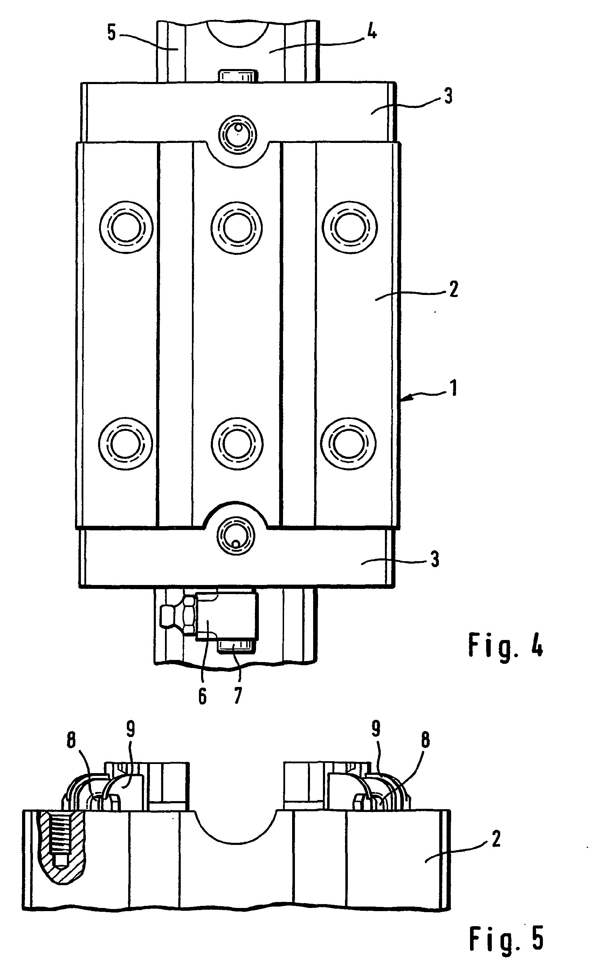

Das in den Figuren 4 und 5 dargestellte vorbekannte Lagerelement 1 weist zwei an einem Tragkörper 2 stirnseitig befestigte Kopfstücke 3 auf. Jedes Kopfstück 3 enthält einen Umlenkkörper für die Umlenkung von Wälzkörpern aus einem Tragbereich in einen Rücklaufbereich des Lagerelementes 1 oder umgekehrt. Das Lagerelement 1 mit seinen beiden Kopfstücken 3 ist längs einer Führungsschiene 4 geradlinig verfahrbar, welche Laufflächen 5 für Wälzkörper des Tragbereichs aufweist. An einem der Kopfstücke 3 ist ein Schmiernippelträger 6 mit einem Schmiernippel mittels einer Schraube 7 befestigt. Der über den Schmiemippel eingeförderte Schmierstoff gelangt über Schmierstoffkanäle, welche in dem Kopfstück 3 angeordnet sind, zu den Wälzkörpern.

Wie sich aus Figur 5 ergibt, ragen Führungsstege für die Wälzkörper im Umlenkbereich aus dem Tragkörper 2 stirnseitig heraus und bilden mit Umlenksegmenten 8 Führungsborde 9. Sie dienen einer exakten Führung der Wälzkörper im Umlenkbereich.

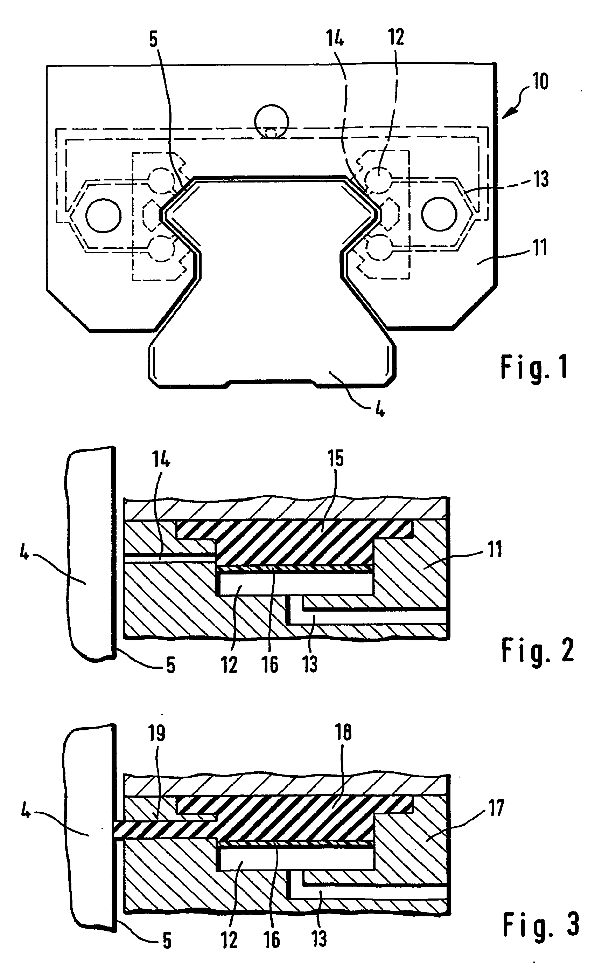

Bei dem in den Figuren 1 und 2 dargestellten erfindungsgemäßen Lagerelement 10 weist ein Kopfstück 11 eine Schmiertasche 12 auf, in die eine Zufuhrleitung 13 einmündet und von der aus eine Austrittsleitung 14 aus dem Kopfstück 11 hinaus zu der Lauffläche 5 der Führungsschiene 4 für die tragenden Wälzkörper führt. Die Schmiertasche 12 ist als hohlzylindrische Ausnehmung ausgeführt. Am Boden der Schmiertasche 12 mündet die Zufuhrleitung 13 ein, während die Austrittsleitung 14 an einer Stelle des Zylindermantels mit der Schmiertasche 12 verbunden ist. In die Schmiertasche 12 ist ein elastischer Stopfen 15 so tief eingesteckt, daß die Austrittsleitung 14 verschlossen ist und daher Schmierstoff nicht über die Austrittsleitung 14 zurück in die Schmiertasche 12 gelangen kann.

Die Austrittsleitung 14 wird erst dann geöffnet, wenn der Flüssigkeitsdruck des Schmierstoffs in der Zufuhrleitung 13 und in der Schmiertasche 12 so groß wird, daß die entgegenwirkende Schließkraft des elastischen Stopfens 15 überwunden wird, wenn also der Stopfen weit genug zusammengedrückt wird. Nach einem Schmierimpuls und dem darauf erfolgenden Abfall des Druckes des Schmierstoffs dehnt sich der elastische Stopfen 15 wieder aus und verschließt damit die Austrittsleitung 14. Ein Leerlaufen der Schmierstoffleitung, wie es z. B. bei konventionellen offenen Schmierstoffkanälen innerhalb von Kopfstücken von Führungswagen von Profilschienenführungen möglich ist, also ein unkontrolliertes Austreten von Schmierstoff, wird mit der erfindungsgemäßen Ausführung verhindert.

Dadurch wird der Schmierstoffbedarf reduziert und die Nachschmierintervalle können vergrößert werden. Außerdem wird sichergestellt, daß mehrere Schmierstellen gleichzeitig und gleichmäßig, unabhängig von der Einbaulage des Führungswagens, mit Schmierstoff versorgt werden. Die Menge des Schmierstoffflusses kann über die Dauer des anliegenden Öldruckes dosiert werden.

Die Schmiertasche 12 wirkt großflächig auf den die Schließkraft erzeugenden elastischen Stopfen 15, um dessen Inhomogenitäten bezüglich des elastischen Verhaltens (bei Filz z. B. die Schwankung des Preßfaktors) auszugleichen. Hierzu ist unter dem elastischen Stopfen 15 zusätzlich eine Druckscheibe 16 aus einem steifen Gummi-Werkstoff angeordnet.

Das erfindungsgemäße Kopfstück 17 in Figur 3 ist grundsätzlich ebenso aufgebaut wie das Kopfstück 11 in Figur 2. Es weist jedoch einen elastischen Stopfen 18 auf, der sich auch in der Austrittsleitung 19 erstreckt und auf diese Weise mit der Lauffläche 5 oder den Wälzkörpern bzw. der Schmierstelle direkt in Verbindung steht. Hier entsteht unabhängig vom Öffnungsdruck in der Schmiertasche zusätzlich unter der Kapillarwirkung ein bedarfsgesteuerter Schmierstoffaustausch zwischen der Schmiertasche 12 und der Schmierstelle z. B. der Lauffläche 5. Der die Schließkraft aufbringende und gleichzeitig den Schmierstoff leitende elastische Stopfen 18 kann z. B. ein poröser oder laminar aufgebrachter Werkstoff sein.

### Bezugszahlen

- 1: Lagerelement
- 2: Tragkörper
- 3: Kopfstück
- 4: Führungsschiene
- 5: Lauffläche
- 6: Schmiernippelträger
- 7: Schraube
- 8: Umlenksegment
- 9: Führungsbord
- 10: Lagerelement
- 11: Kopfstück
- 12: Schmiertasche
- 13: Zufuhrleitung
- 14: Austrittsleitung
- 15: elastischer Stopfen
- 16: Druckscheibe
- 17: Kopfstück
- 18: elastischer Stopfen
- 19: Austrittsleitung

## Patentansprüche

1. Linearwälzlagerelement mit einem Tragkörper, der über Wälzkörper an der Lauffläche (5) einer Führungsschiene (4) verschiebbar gelagert ist und für einen Wälzkörperumlauf jeweils eine zu seiner Bewegungsrichtung parallele Tragzone und einen Rücklaufkanal aufweist, die über zwei Umlenkkanäle miteinander verbunden sind, welche an dem Tragkörper in stirnseitig angrenzenden Kopfstücken (11, 17) angeordnet sind, wobei die Kopfstücke (11, 17) zu den Wälzkörpern führende Schmierstoffleitungen enthalten, welche an einer Einfüllstelle des jeweiligen Kopfstücks (11, 17) beginnen, wobei mindestens eine für einen Wälzkörperumlauf vorgesehene Schmierstoffleitung in eine Zufuhrleitung (13) und eine Austrittsleitung (14, 19) aufgeteilt ist, wobei die Zufuhrleitung (13) und die Austrittsleitung (14, 19) über eine verschließbare Schmiertasche (12) miteinander verbunden sind, **dadurch gekennzeichnet, daß** die Schmiertasche (12) in der Form eines Hohlzylinders ausgeführt ist, in welchen ein die Austrittsleitung (14, 19) verschließender elastischer Stopfen (15, 18) hineinragt, wobei innerhalb der Schmiertasche (12) eine an dem elastischen Stopfen (15, 18) anliegende Druckscheibe (16) angeordnet ist

2. Lagerelement nach Anspruch 1, **dadurch gekennzeichnet, daß** die Austrittsleitung (14, 19) an der Lauffläche (5) der Führungsschiene (4) endet.

3. Lagerelement nach Anspruch 1, **dadurch gekennzeichnet, daß** der elastische Stopfen (15, 18) aus einem Kunststoff oder einem Gummi-werkstoff hergestellt ist.

4. Lagerelement nach Anspruch 1, **dadurch gekennzeichnet, daß** der elastische Stopfen aus einem Filz oder einem porösen Werkstoff hergestellt ist.

5. Lagerelement nach Anspruch 1, **dadurch gekennzeichnet, daß** die Druckscheibe (16) aus einem steifen Gummi-Werkstoff hergestellt ist

6. Lagerelement nach Anspruch 4, **dadurch gekennzeichnet, daß** der Werkstoff des elastischen Stopfens (18) sich auch innerhalb der Austrittsleitung (19) erstreckt und mit der Lauffläche (5) der Führungsschiene (4) in Berührung steht.

## Claims

1. Linear roller bearing element having a carrier which is mounted displaceably via rolling bodies on the running face (5) of a guide rail (4) and has in each case a carrying zone parallel to its movement direction and a return channel for rolling-body circulation, which are connected to one another via two deflection channels which are arranged on the carrier in head pieces (11, 17) which are adjacent on the end side, the head pieces (11, 17) containing lubricant lines which lead to the rolling bodies and begin at a filling location of the respective head piece (11, 17), at least one lubricant line which is provided for rolling-body circulation being divided into a feed line (13) and an outlet line (14, 19), the feed line (13) and the outlet line (14, 19) being connected to one another via a closable lubricating pocket (12), **characterized in that** the lubricating pocket (12) is configured in the shape of a hollow cylinder, into which an elastic plug (15, 18) which closes the outlet line (14, 19) protrudes, a pressure disc (16) which bears against the elastic plug (15, 18) being arranged within the lubricating pocket (12).

2. Bearing element according to Claim 1, **characterized in that** the outlet line (14, 19) ends on the running face (5) of the guide rail (4).

3. Bearing element according to Claim 1, **characterized in that** the elastic plug (15, 18) is manufactured from a plastic or a rubber material.

4. Bearing element according to Claim 1, **characterized in that** the elastic plug is manufactured from a felt or a porous material.

5. Bearing element according to Claim 1, **characterized in that** the pressure disc (16) is manufactured from a rigid rubber material.

6. Bearing element according to Claim 4, **characterized in that** the material of the elastic plug (18) also extends within the outlet line (19) and is in contact with the running face (5) of the guide rail (4).

## Revendications

1. Elément de palier à roulement linéaire comportant un corps porteur, lequel est logé de façon à pouvoir se déplacer par l'intermédiaire de corps de roulement sur la surface de roulement (5) d'un rail de guidage (4) et présente chaque fois une zone portante parallèle à son sens de déplacement et un canal de retour destinés à une circulation des corps de roulement, laquelle zone et lequel canal sont reliés entre eux par l'intermédiaire de deux canaux de renvoi disposés dans des pièces de tête (11, 17) adjacentes au côté frontal du corps porteur, les pièces de tête (11, 17) renfermant des conduits de lubrifiant conduisant aux corps de roulement, lesquels conduits débutent à un endroit de remplissage de chaque pièce de tête (11, 17), au moins un conduit de lubrifiant prévu pour une circulation des corps de roulement étant partagé en un conduit d'arrivée (13) et un conduit de sortie (14, 19), le conduit d'arrivée (13) et le conduit de sortie (14, 19) étant reliés entre eux par l'intermédiaire d'une poche de lubrification (12) pouvant être obturée, **caractérisé en ce que** la poche de lubrification (12) est conformée en forme de cylindre creux dans lequel entre un bouchon élastique (15, 18) obturant le conduit de sortie (14, 19), un disque de pression (16) appuyant sur le bouchon élastique (15, 18) étant disposé à l'intérieur de la poche de lubrification (12).

2. Elément de palier selon la revendication 1, **caractérisé en ce que** le conduit de sortie (14, 19) se termine à la surface de roulement (5) du rail de guidage (4).

3. Elément de palier selon la revendication 1, **caractérisé en ce que** le bouchon élastique (15, 18) est fabriqué à partir d'une matière synthétique ou d'un matériau en caoutchouc.

4. Elément de palier selon la revendication 1, **caractérisé en ce que** le bouchon élastique est fabriqué à partir d'un feutre ou d'un matériau poreux.

5. Elément de palier selon la revendication 1, **caractérisé en ce que** le disque de pression (16) est fabriqué à partir d'un matériau en caoutchouc rigide.

6. Elément de palier selon la revendication 4, **caractérisé en ce que** le matériau du bouchon élastique (18) s'étend également à l'intérieur du conduit de sortie (19) et est en contact avec la surface de roulement (5) du rail de guidage (4).
